# EUROPEAN PATENT SPECIFICATION

(11) **EP 4 346 069 B1**
(45) Date of publication and mention of the grant of the patent: **11.06.2025**
(21) Application number: 23199247.0
(22) Date of filing: 22.09.2023
(51) Int. Cl.: H02K 5/20, F16H 57/04, H02K 7/116, H02K 9/19

(54) **DRIVE UNIT**
ANTRIEBSEINHEIT
UNITÉ D'ENTRAÎNEMENT

(30) Priority: 29.09.2022 JP 2022155810
(43) Date of publication of application: 03.04.2024
(73) Proprietor: HONDA MOTOR CO., LTD., Minato-ku Tokyo 107-8556 (JP)
(72) Inventor: KAWAMURA, Yasuhiro, Saitama 351-0193 (JP); TANAKA, Shingo, Saitama 351-0193 (JP)
(74) Representative: Weickmann & Weickmann PartmbB

(56) References cited:
- CN-A- 111 137 308
- DE-A1- 102020 200 657
- DE-U1- 29 924 452
- JP-A- 2014 193 021
- JP-A- 2020 054 066

## Description

### BACKGROUND OF THE INVENTION

### FIELD OF THE INVENTION

The present invention relates to a drive unit.

### DESCRIPTION OF THE RELATED ART

For example, JP 2006-197785 A discloses a cooling structure for a rotating electric machine (electric motor). Conventionally, a drive unit in which a rotating electric machine and a transmission are integrated is also known. Furthermore, reference shall be made to documents DE 10 2020 200657 A1, JP 2020 054 066 A, CN 111 137 308 A and DE 299 24 452 U1, all of which disclose drive units with rotating electric machines, transmissions and cooling structures.

### SUMMARY OF THE INVENTION

When the drive unit is provided with a cooling structure, it is preferable to provide a cooling structure capable of cooling both the rotating electric machine and the transmission. In this case, a cooling structure that does not become complicated is required.

An object of the present invention is to solve the aforementioned problem.

According to claim 1 of the present invention, a drive unit is provided. The drive unit includes a rotating electric machine including a rotating electric machine casing, a transmission including a transmission casing and integrated with the rotating electric machine, and a cooling structure configured to cool the rotating electric machine and the transmission, wherein the cooling structure includes a first cooling passage configured to cool the rotating electric machine and a second cooling passage configured to cool the transmission, and the first cooling passage and the second cooling passage are in communication with each other, and a common coolant flows through the first cooling passage and the second cooling passage.

According to claim 1, since the first cooling passage and the second cooling passage communicate with each other and a common coolant flows through the first cooling passage and the second cooling passage, the cooling structure of the drive unit can be simplified.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a schematic overall view of a drive unit according to an embodiment of the present invention;
FIG. 2 is a peripheral sectional view around a communication passage in the drive unit;
FIG. 3 is a peripheral sectional view around an outlet passage of the drive unit;
FIG. 4 is a perspective view showing a flow path shape of a cooling structure of the drive unit; and
FIG. 5 is a schematic diagram of a propeller device equipped with the drive unit.

### DETAILED DESCRIPTION OF THE INVENTION

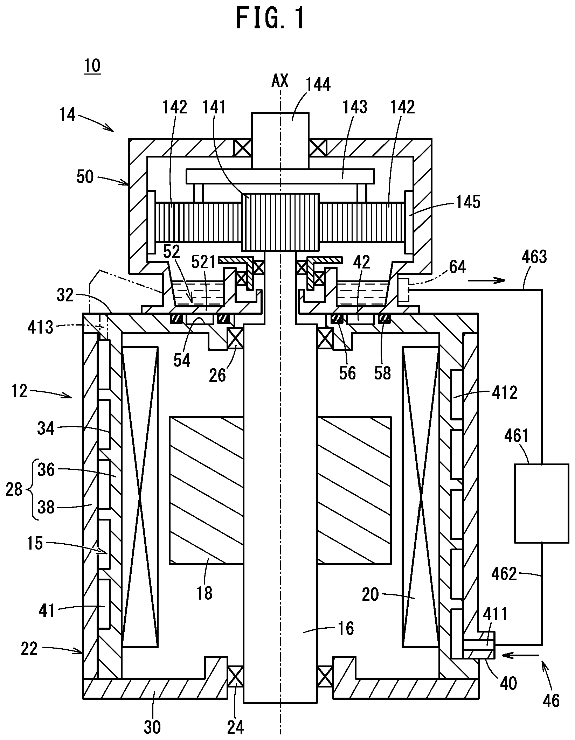

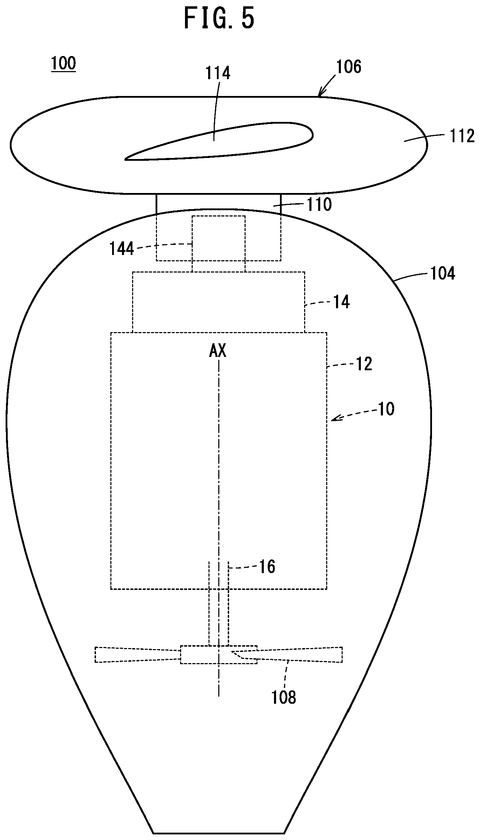

A drive unit 10 shown in FIG. 1 includes a rotating electric machine 12, a transmission 14 integrated with the rotating electric machine 12, and a cooling structure 15 for cooling the rotating electric machine 12 and the transmission 14. The drive unit 10 is used in a state in which a rotation axis AX (hereinafter simply referred to as "axis AX") of the rotating electric machine 12 is directed in the vertical direction. The term "vertical direction" includes not only an exact vertical direction but also a direction slightly inclined with respect to the vertical direction. Although the use of the drive unit 10 is not particularly limited, it can be used as a power source for driving a propeller 106 of a vertical take-off and landing aircraft, for example (see FIG. 5).

The rotating electric machine 12 is an electric motor. The rotating electric machine 12 includes a shaft 16 that is rotatably supported, a rotor 18 fixed to the shaft 16, a stator 20 surrounding the rotor 18, and a rotating electric machine casing 22 accommodating the shaft 16, the rotor 18, and the stator 20.

The rotor 18 is disposed on an axis AX of the rotating electric machine 12. Although not shown in detail, the rotor 18 includes a rotor core made of laminated steel plates, for example, and magnets fixed to the rotor core. The shaft 16 and the rotor 18 rotate integrally. The rotor 18 is rotatably supported by bearings 24 and 26 disposed at one end and another end of the rotating electric machine casing 22, respectively.

The stator 20 is formed in a hollow cylindrical shape, and is fixed to the inner circumferential surface of the rotating electric machine casing 22. Although not shown in detail, the stator 20 includes a stator core and coils retained by the stator core. Electric power is supplied from a battery (not shown) to the stator 20, a current flows through the coils, and a magnetic field is generated, whereby the rotor 18 and the shaft 16 are rotationally driven.

The rotating electric machine casing 22 has a cylindrical circumferential wall portion 28 surrounding the stator 20, a ceiling portion 32 constituting one end portion (upper end portion) of the rotating electric machine casing 22, and a bottom wall portion 30 constituting another end portion (lower end portion) of the rotating electric machine casing 22. The circumferential wall portion 28 has a circumferential wall body 36 in which a spiral groove 34 is formed on an outer circumferential surface thereof, and a cylindrical cover 38 surrounding the circumferential wall body 36.

The rotating electric machine 12 is provided with a first cooling passage 41 of the cooling structure 15. The first cooling passage 41 cools the rotating electric machine 12. A coolant is supplied to the first cooling passage 41. The coolant is, for example, a liquid coolant. The liquid coolant is, for example, water or antifreeze liquid.

The first cooling passage 41 has an inlet passage 411, a spiral passage 412, and a discharge passage 413. The inlet passage 411 introduces the coolant into the rotating electric machine casing 22. The inlet passage 411 is provided in a lower portion of the rotating electric machine casing 22 in a use state in which the axis AX of the rotating electric machine 12 is directed in the vertical direction. In the present embodiment, the inlet passage 411 is formed in an inlet port 40 provided in the lower portion of the cylindrical cover 38. A supply line 462 of a coolant circulation device 46 is connected to the inlet port 40.

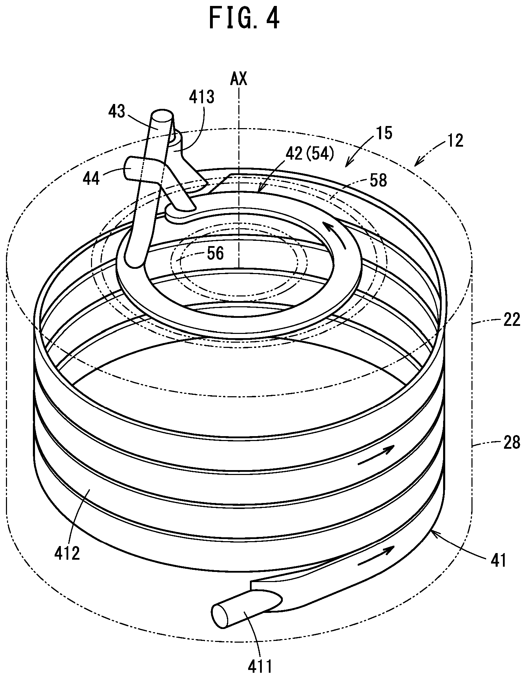

As shown in FIG. 4, the spiral passage 412 extends spirally, with the axis AX of the rotating electric machine 12 as the center, in the circumferential wall portion 28 of the rotating electric machine casing 22 on the downstream side of the inlet passage 411.

As shown in FIG. 1, in the present embodiment, the spiral passage 412 is formed between the circumferential wall body 36 and the cylindrical cover 38. A lower end of the spiral passage 412 is an upstream end of the spiral passage 412. An upper end of the spiral passage 412 is a downstream end of the spiral passage 412.

The discharge passage 413 discharges the coolant that has passed through the spiral passage 412 from the rotating electric machine casing 22. The discharge passage 413 penetrates an end wall portion (ceiling portion 32) constituting one end portion of the rotating electric machine casing 22 in a use state in the axial direction of the rotating electric machine 12.

The transmission 14 is fixed to one end portion (ceiling portion 32) of the rotating electric machine 12. In the present embodiment, the transmission 14 is configured as a planetary gear unit. In the present embodiment, the transmission 14 is disposed coaxially with the rotating electric machine 12. The transmission 14 includes a sun gear 141 fixed to one end (upper end) of the shaft 16 of the rotating electric machine 12, and a plurality of planetary gears 142 meshing with the sun gear 141.

The transmission 14 further includes a carrier 143 for supporting a plurality of planetary gears 142, an output shaft 144 fixed to the carrier 143, and an internal gear 145 meshing with the plurality of planetary gears 142. The output shaft 144 is disposed coaxially with the shaft 16. A load (for example, the propeller 106 shown in FIG. 5) is coupled to the output shaft 144. The transmission 14 further includes a transmission casing 50 which accommodates the sun gear 141, the planetary gear 142, the carrier 143, the output shaft 144 and the internal gear 145. The internal gear 145 is formed on an inner circumferential surface of the transmission casing 50. The configuration of the transmission 14 is not limited to the planetary gear unit, and other transmission mechanisms may be used.

Lubricating oil circulates inside the transmission 14. The transmission 14 has an oil reservoir portion 52 for storing the lubricating oil. The oil reservoir portion 52 is provided in a lower portion of the transmission casing 50. The oil reservoir portion 52 is formed in an annular shape centered about the axis AX of the rotating electric machine 12. Although details are not shown, a lubricating oil circulation mechanism is provided inside the transmission casing 50 to recover lubricating oil from the oil reservoir portion 52 and to inject (spray) the lubricating oil from above a gear train (sun gear 141, planetary gear 142 and internal gear 145). A pump for recovering the lubricating oil from the oil reservoir portion 52 may be, for example, a cam-type pump mechanically interlocked with the rotation of the shaft 16.

The cooling structure 15 further includes a second cooling passage 42 for cooling the transmission 14. The first cooling passage 41 and the second cooling passage 42 communicate with each other, and a common coolant flows through the first cooling passage 41 and the second cooling passage 42. The first cooling passage 41 and the second cooling passage 42 are arranged in series. In the present embodiment, the first cooling passage 41 is disposed upstream of the second cooling passage 42. Specifically, the second cooling passage 42 is formed by a gap provided between the rotating electric machine casing 22 and the transmission casing 50.

The second cooling passage 42 is formed so as to surround the axis AX of the rotating electric machine 12. The second cooling passage 42 is formed along the oil reservoir portion 52. A groove 54 surrounding the axis AX is formed in an upper surface of the ceiling portion 32 of the rotating electric machine casing 22. The groove 54 and a lower surface of the transmission casing 50 form the second cooling passage 42. The lower surface of a bottom wall 521 of the oil reservoir portion 52 is a part of the lower surface of the transmission casing 50. Therefore, the second cooling passage 42 is formed by the lower surface of the bottom wall 521 of the oil reservoir portion 52 and the groove 54. As shown in FIG. 4, the second cooling passage 42 (groove 54) extends in a C-shape so as to surround the axis AX of the rotating electric machine 12. It should be noted that the shape of the second cooling passage 42 (groove 54) is not limited to the C-shape (arc shape) as long as it follows the oil reservoir portion 52. When viewed from the axial direction of the rotating electric machine 12, the second cooling passage 42 (groove 54) may have a polygonal shape surrounding the axis AX or may have a wave shape extending so as to surround the axis AX.

As shown in FIG. 1, the drive unit 10 further includes an inner seal member 56 and an outer seal member 58 disposed between the rotating electric machine 12 and the transmission 14. The inner seal member 56 is disposed inside the second cooling passage 42 extending in an arc shape (C-shape) and between the rotating electric machine 12 and the transmission 14. The outer seal member 58 is disposed outside the second cooling passage 42 and between the rotating electric machine 12 and the transmission 14. The inner seal member 56 and the outer seal member 58 are sandwiched and held between the rotating electric machine casing 22 and the transmission casing 50. The inner seal member 56 and the outer seal member 58 are disposed concentrically with respect to the axis AX.

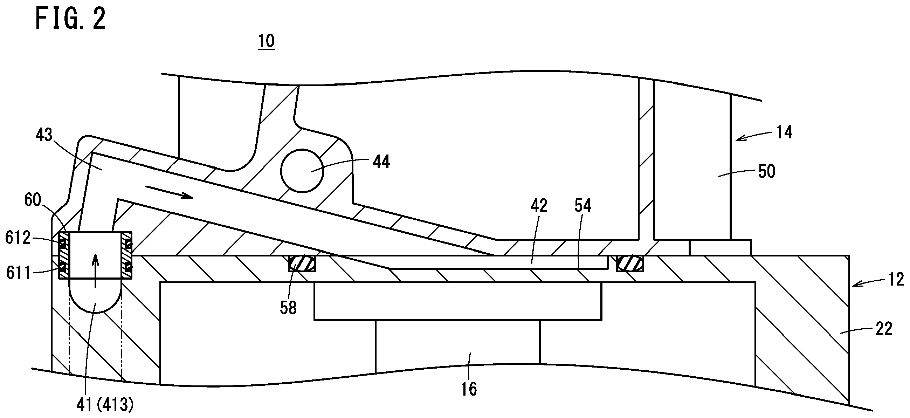

As shown in FIG. 2, the transmission casing 50 has a communication passage 43 that connects the first cooling passage 41 and the second cooling passage 42. An upstream end of the communication passage 43 is connected to the downstream end (discharge passage 413) of the first cooling passage 41 on a radially-outward side of the outer seal member 58. A downstream end of the communication passage 43 is connected to the second cooling passage 42 between the inner seal member 56 and the outer seal member 58 (see FIG. 4). The downstream end of the communication passage 43 is connected to an upstream end of the second cooling passage 42. The communication passage 43 is formed in an L-shape (a V-shape with the top facing upward).

An annular joint member 60 is disposed straddling the downstream end of the first cooling passage 41 and the upstream end of the communication passage 43. The joint member 60 is liquid-tightly fitted to the rotating electric machine casing 22 via a seal member 611 and is liquid-tightly fitted to the transmission casing 50 via a seal member 612. A hollow portion of the joint member 60 communicates with the first cooling passage 41 and the communication passage 43.

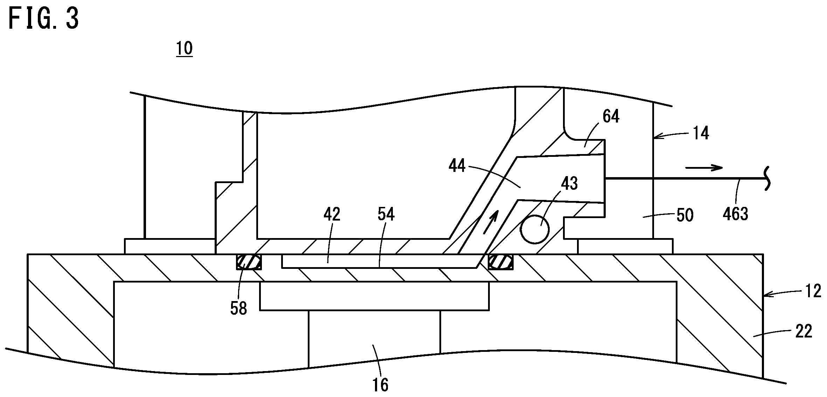

As shown in FIG. 3, the transmission casing 50 further includes an outlet passage 44 for discharging the coolant that has passed through the second cooling passage 42 from the transmission casing 50. An upstream end of the outlet passage 44 is connected to a downstream end of the second cooling passage 42. The outlet passage 44 opens at an outlet port 64 provided in the transmission casing 50.

As shown in FIGS. 2 to 4, the outlet passage 44 and the communication passage 43 form a multi-level crossing. Specifically, the outlet passage 44 extends above the communication passage 43.

As shown in FIG. 1, a recovery line 463 of the coolant circulation device 46 is connected to the outlet port 64. The coolant is introduced into a supply unit 461 of the coolant circulation device 46 via the recovery line 463. Although not shown in detail, the supply unit 461 includes, for example, a heat exchanger for cooling the coolant and a pump for supplying the coolant to the first cooling passage 41 of the cooling structure 15.

The supply unit 461 of the coolant circulation device 46 supplies the coolant to the first cooling passage 41 through the supply line 462. The coolant is discharged from the rotating electric machine casing 22 after sequentially flowing through the inlet passage 411, the spiral passage 412, and the discharge passage 413 of the first cooling passage 41. While the coolant flows through the spiral passage 412, the rotating electric machine casing 22 is cooled by the coolant.

As shown in FIG. 2, the coolant flows from the discharge passage 413 of the first cooling passage 41 to the communication passage 43 and then flows into the second cooling passage 42 via the communication passage 43. As shown in FIG. 4, the coolant flows along the C-shaped second cooling passage 42. When the coolant flows through the second cooling passage 42, the transmission casing 50 is cooled by the coolant. As shown in FIG. 3, the coolant is discharged from the second cooling passage 42 through the outlet passage 44 to the outside of the transmission casing 50. As shown in FIG. 1, the coolant discharged from the transmission casing 50 is returned to the supply unit 461 via the recovery line 463 of the coolant circulation device 46.

As shown in FIG. 5, the drive unit 10 can be applied to a propeller device 100. The drive unit 10 is not limited to a power source for the propeller device 100, but can be used as a power source for other devices. The propeller device 100 is provided with the drive unit 10, an accommodation member 104 for housing the drive unit 10, and the propeller 106 connected to the transmission 14 of the drive unit 10.

The propeller device 100 is used for a vertical take-off and landing aircraft, for example. Therefore, the rotating electric machine 12 is disposed such that the axis AX of the rotating electric machine 12 is directed in the vertical direction when the propeller device 100 is in use. The propeller device 100 may adopt a configuration in which the axis AX of the rotating electric machine 12 is directed substantially in the horizontal direction when the propeller device 100 is in use.

A fan 108 for generating an air flow in the accommodation member 104 is attached to a lower end of the shaft 16 of the rotating electric machine 12, and blows air to a heat exchanger (not shown) of the supply unit 461, for example. The propeller 106 has a propeller shaft 110 connected to an output shaft 144 of the transmission 14, a hub 112 provided in an upper end of the propeller shaft 110, and a plurality of blades 114 projecting radially outward from the hub 112. It should be noted that the present invention can be applied to an aircraft, a ship, a vehicle such as a two-wheeled or four-wheeled vehicle, or the like by arranging the rotation axis of the output shaft 144 of the transmission 14 of the drive unit 10 to be directed in the horizontal direction.

According to the present embodiment, the following effects are obtained.

The cooling structure 15 of the drive unit 10 includes the first cooling passage 41 configured to cool the rotating electric machine 12 and the second cooling passage 42 configured to cool the transmission 14. The first cooling passage 41 and the second cooling passage 42 are in communication with each other. Since the common coolant flows through the first cooling passage 41 and the second cooling passage 42, the cooling structure 15 of the drive unit 10 can be simplified.

The first cooling passage 41 is disposed on an upstream side of the second cooling passage 42. In the drive unit 10, since the temperature of the rotating electric machine 12 tends to be higher than that of the transmission 14, the rotating electric machine 12 can be effectively cooled by disposing the first cooling passage 41 on the upstream side of the second cooling passage 42.

Since the second cooling passage 42 is formed by a gap provided between the rotating electric machine casing 22 and the transmission casing 50, the second cooling passage 42 can be realized with a simple structure.

Since the second cooling passage 42 extends in the circumferential direction of the rotating electric machine 12 so as to surround the axis AX of the rotating electric machine 12, the transmission 14 can be efficiently cooled.

The annular inner seal member 56 and the annular outer seal member 58 are disposed between the rotating electric machine 12 and the transmission 14. The inner seal member 56 is disposed inside the second cooling passage 42 extending in an arc shape, and the outer seal member 58 is disposed outside the second cooling passage 42. Since the inner seal member 56 and the outer seal member 58 are provided, it is possible to simplify the sealing structure for preventing leakage of the coolant from the second cooling passage 42.

As shown in FIG. 2, the transmission casing 50 includes the communication passage 43 connecting the first cooling passage 41 and the second cooling passage 42. The upstream end of the communication passage 43 is connected to the first cooling passage 41 on the radially-outward side relative to the outer seal member 58. As shown in FIG. 4, the downstream end of the communication passage 43 is connected to the second cooling passage 42 between the inner seal member 56 and the outer seal member 58. In accordance with this configuration, the first cooling passage 41 and the second cooling passage 42 can be connected via the communication passage 43 without adopting a complicated sealing structure.

As shown in FIG. 1, since the lubricating oil is cooled by the second cooling passage 42 formed along the oil reservoir portion 52 of the transmission 14, the entire interior of the transmission 14 can be efficiently cooled by the lubricating oil circulating in the transmission 14.

The first cooling passage 41 includes the spiral passage 412 extending spirally, with the axis AX of the rotating electric machine 12 as the center, in the circumferential wall portion 28 of the rotating electric machine casing 22, and the discharge passage 413 configured to discharge the coolant having passed through the spiral passage 412 from the rotating electric machine casing 22. The discharge passage 413 penetrates in the axial direction of the rotating electric machine casing 22, the end wall portion constituting one end portion of the rotating electric machine casing 22 in the axial direction. In accordance with this configuration, the length of the discharge passage 413 can be shortened.

As shown in FIG. 4, the second cooling passage 42 extends in a C-shape so as to surround the axis AX of the rotating electric machine 12. The transmission casing 50 includes the communication passage 43 and the outlet passage 44, and the communication passage 43 and the outlet passage 44 form a multi-level crossing. In accordance with this configuration, it is possible to increase the passage length of the C-shaped second cooling passage 42 and improve the cooling performance for the transmission 14.

As shown in FIG. 1, in the rotating electric machine 12, the inlet passage 411 is provided in the lower portion of the rotating electric machine casing 22, the discharge passage 413 is provided in the ceiling portion 32 of the rotating electric machine casing 22, and the discharge passage 413 penetrates the ceiling portion 32 in the axial direction. In accordance with this configuration, when the rotating electric machine 12 is in a use state in which the axis AX of the rotating electric machine 12 is directed in the vertical direction, air can be discharged favorably from the cooling passage including the spiral passage 412.

## Claims

1. A drive unit (10) comprising:
a rotating electric machine (12) including a rotating electric machine casing (22);
a transmission (14) including a transmission casing (50) and integrated with the rotating electric machine; and
a cooling structure (15) configured to cool the rotating electric machine and the transmission,
wherein the cooling structure includes a first cooling passage (41) configured to cool the rotating electric machine and a second cooling passage (42) configured to cool the transmission, and
the first cooling passage and the second cooling passage are in communication with each other, and a common coolant flows through the first cooling passage and the second cooling passage,
the second cooling passage is formed by a gap provided between the rotating electric machine casing and the transmission casing and extends in a C-shape in a circumferential direction of the rotating electric machine so as to surround an axis (AX) of the rotating electric machine,
the drive unit further comprises:
an inner seal member (56) having an annular shape and disposed inside the second cooling passage, between the rotating electric machine and the transmission; and
an outer seal member (58) having an annular shape and disposed outside the second cooling passage, between the rotating electric machine and the transmission,
the transmission casing includes a communication passage (43) connecting the first cooling passage and the second cooling passage,
an upstream end of the communication passage is connected to the first cooling passage on a radially-outward side relative to the outer seal member, and
a downstream end of the communication passage is connected to the second cooling passage between the inner seal member and the outer seal member.

2. The drive unit according to claim 1, wherein a lubricating oil circulates inside the transmission,
the transmission includes an oil reservoir portion (52) configured to store the lubricating oil, and
the second cooling passage is formed along the oil reservoir portion.

3. The drive unit according to any one of claims 1 to 2, wherein the first cooling passage includes a spiral passage (412) extending spirally, with the axis of the rotating electric machine as a center, in a circumferential wall portion (28) of the rotating electric machine casing, and a discharge passage (413) configured to discharge the coolant having passed through the spiral passage, from the rotating electric machine casing, and
the discharge passage penetrates, in an axial direction of the rotating electric machine casing, an end wall portion constituting one end portion of the rotating electric machine casing in the axial direction.

4. The drive unit according to claim 1, wherein
the transmission casing includes an outlet passage (44) configured tc discharge the coolant having passed through the second cooling passage, from the transmission casing,
an upstream end of the outlet passage is connected to a downstream end of the second cooling passage, and
the communication passage and the outlet passage form a multi-level crossing.

## Patentansprüche

1. Antriebseinheit (10), umfassend:
eine rotierende elektrische Maschine (12), welche ein Gehäuse (22) der rotierenden elektrischen Maschine umfasst;
ein Getriebe (14), welches ein Getriebegehäuse (50) umfasst und mit der rotierenden elektrischen Maschine integriert ist; und
eine Kühlstruktur (15), welche dazu eingerichtet ist, die rotierende elektrische Maschine und das Getriebe zu kühlen,
wobei die Kühlstruktur einen ersten Kühldurchgang (41), welcher dazu eingerichtet ist, die rotierende elektrische Maschine zu kühlen, und einen zweiten Kühldurchgang (42) umfasst, welcher dazu eingerichtet ist, das Getriebe zu kühlen, und
der erste Kühldurchgang und der zweite Kühldurchgang in Kommunikation miteinander sind und ein gemeinsames Kühlmittel durch den ersten Kühldurchgang und den zweiten Kühldurchgang strömt,
der zweite Kühldurchgang durch einen Abstand gebildet ist, welcher zwischen dem Gehäuse der rotierenden elektrischen Maschine und dem Getriebegehäuse gebildet ist und sich in einer C-Form in einer Umfangsrichtung der rotierenden elektrischen Maschine erstreckt, um so eine Achse (AX) der rotierenden elektrischen Maschine zu umgeben, wobei die Antriebseinheit ferner umfasst:
ein inneres Dichtungselement (56), welches eine ringförmige Form aufweist und innerhalb des zweiten Kühldurchgangs zwischen der rotierenden elektrischen Maschine und dem Getriebe angeordnet ist; und
ein äußeres Dichtungselement (58), welches eine ringförmige Form aufweist und außerhalb des zweiten Kühldurchgangs zwischen der rotierenden elektrischen Maschine und dem Getriebe angeordnet ist,
wobei das Getriebegehäuse einen Kommunikationsdurchgang (43) umfasst, welcher den ersten Kühldurchgang und den zweiten Kühldurchgang verbindet, wobei ein stromaufwärtiges Ende des Kommunikationsdurchgangs mit dem ersten Kühldurchgang an einer radial äußeren Seite relativ zu dem äußeren Dichtungselement verbunden ist, und
ein stromabwärtiges Ende des Kommunikationsdurchgangs mit dem zweiten Kühldurchgang zwischen dem inneren Dichtungselement und dem äußeren Dichtungselement verbunden ist.

2. Antriebseinheit nach Anspruch 1, wobei ein Schmieröl innerhalb des Getriebes zirkuliert,
das Getriebe einen Ölreservoir-Abschnitt (52) umfasst, welcher dazu eingerichtet ist, das Schmieröl zu speichern, und
der zweite Kühldurchgang entlang des Ölreservoir-Abschnitts gebildet ist.

3. Antriebseinheit nach einem der Ansprüche 1 bis 2, wobei der erste Kühldurchgang einen Spiraldurchgang (412) umfasst, welcher sich spiralförmig mit der Achse der rotierenden elektrischen Maschine als ein Zentrum in einem umfänglichen Wandabschnitt (28) des Gehäuses der rotierenden elektrischen Maschine erstreckt, sowie einen Abgabedurchgang (413), welcher dazu eingerichtet ist, das Kühlmittel, welches durch den Spiraldurchgang gelaufen ist, aus dem Gehäuse der rotierenden elektrischen Maschine abzugeben, und
der Abgabedurchgang in einer axialen Richtung des Gehäuses der rotierenden elektrischen Maschine einen Endwand-Abschnitt, welcher einen Endabschnitt des Gehäuses der rotierenden elektrischen Maschine bildet, in der axialen Richtung durchdringt.

4. Antriebseinheit nach Anspruch 1, wobei das Getriebegehäuse einen Auslassdurchgang (44) umfasst, welcher dazu eingerichtet ist, das Kühlmittel, welches durch den zweiten Kühldurchgang gelaufen ist, aus dem Getriebegehäuse auszulassen,
wobei ein stromaufwärtiges Ende des Auslassdurchgangs mit einem stromabwärtigen Ende des zweiten Kühldurchgangs verbunden ist, und der Kommunikationsdurchgang und der Auslassdurchgang eine mehrstufige Kreuzung bilden.

## Revendications

1. Unité d'entraînement (10) comportant :
une machine électrique tournante (12) comportant un carter de machine électrique tournante (22) ;
une transmission (14) comportant un carter de transmission (50) et intégrée à la machine électrique tournante ; et
une structure de refroidissement (15) configurée pour refroidir la machine électrique tournante et la transmission,
dans laquelle la structure de refroidissement comporte un premier passage de refroidissement (41) configuré pour refroidir la machine électrique tournante et un deuxième passage de refroidissement (42) configuré pour refroidir la transmission, et
le premier passage de refroidissement et le deuxième passage de refroidissement sont en communication l'un avec l'autre, et un liquide de refroidissement commun circule à travers le premier passage de refroidissement et le deuxième passage de refroidissement,
le deuxième passage de refroidissement est formé par un espace ménagé entre le carter de machine électrique tournante et le carter de transmission et s'étend en forme de C dans une direction circonférentielle de la machine électrique tournante de façon à entourer un axe (AX) de la machine électrique tournante, l'unité d'entraînement comporte en outre :
un organe d'étanchéité interne (56) de forme annulaire et disposé à l'intérieur du deuxième passage de refroidissement, entre la machine électrique tournante et la transmission ; et
un organe d'étanchéité externe (58) de forme annulaire et disposé à l'extérieur du deuxième passage de refroidissement, entre la machine électrique tournante et la transmission,
le carter de transmission comporte un passage de communication (43) reliant le premier passage de refroidissement et le deuxième passage de refroidissement,
une extrémité amont du passage de communication est reliée au premier passage de refroidissement sur un côté radialement vers l'extérieur par rapport à l'organe d'étanchéité externe, et
une extrémité aval du passage de communication est reliée au deuxième passage de refroidissement entre l'organe d'étanchéité interne et l'organe d'étanchéité externe.

2. Unité d'entraînement selon la revendication 1, dans laquelle une huile de lubrification circule à l'intérieur de la transmission,
la transmission comporte une partie de réservoir d'huile (52) configurée pour stocker l'huile de lubrification, et
le deuxième passage de refroidissement est formé le long de la partie de réservoir d'huile.

3. Unité d'entraînement selon l'une quelconque des revendications 1 à 2,
dans laquelle le premier passage de refroidissement comporte un passage en spirale (412) s'étendant en spirale, avec l'axe de la machine électrique tournante comme centre, dans une partie de paroi circonférentielle (28) du carter de machine électrique tournante, et un passage d'évacuation (413) configuré pour évacuer le liquide de refroidissement ayant traversé le passage en spirale, à partir du carter de machine électrique tournante, et
le passage d'évacuation pénètre, dans une direction axiale du carter de machine électrique tournante, une partie de paroi d'extrémité constituant une partie d'extrémité du carter de machine électrique tournante dans la direction axiale.

4. Unité d'entraînement selon la revendication 1, dans laquelle le carter de transmission comporte un passage de sortie (44) configuré pour évacuer le liquide de refroidissement ayant traversé le deuxième passage de refroidissement, à partir du carter de transmission,
une extrémité amont du passage de sortie est reliée à une extrémité aval du deuxième passage de refroidissement, et
le passage de communication et le passage de sortie forment un croisement à plusieurs niveaux.
